# EUROPÄISCHE PATENTSCHRIFT

(11) **EP 3 519 287 B1**
(45) Veröffentlichungstag und Bekanntmachung des Hinweises auf die Patenterteilung: **06.10.2021**
(21) Anmeldenummer: 17751342.1
(22) Anmeldetag: 02.08.2017
(51) Int. Cl.: B62M 9/122, B62M 9/123, B62M 9/133

(54) **VERFAHREN UND VORRICHTUNG ZUM EINLERNEN EINER AUTOMATISCH ARBEITENDEN GANGSCHALTUNG**
METHOD AND APPARATUS FOR SELF TRAINING AUTOMATIC GEAR SHIFT
MÉTHODE ET DISPOSITIF POUR FORMER UN CHANGEMENT DE VITESSES AUTOMATIQUE

(30) Priorität: 27.09.2016 DE 102016218499
(43) Veröffentlichungstag der Anmeldung: 07.08.2019
(73) Patentinhaber: Robert Bosch GmbH, 70442 Stuttgart (DE)
(72) Erfinder: GREINER, Rinaldo, 72762 Reutlingen (DE); BAUMGAERTNER, Daniel, 72070 Tuebingen (DE)
(86) Internationale Anmeldenummer: PCT/EP2017/069551
(87) Internationale Veröffentlichungsnummer: WO 2018/059801

(56) Entgegenhaltungen:
- DE-A1-102009 011 882
- US-A- 6 047 230

## Beschreibung

Die Erfindung betrifft ein Verfahren und eine Vorrichtung zum Einlernen einer automatisch arbeitenden Gangschaltung eines Zweirads sowie ein entsprechendes Zweirad.

### Stand der Technik

Allgemein erfordert der Antrieb eines Fahrzeugs eine Übertragung der Antriebskraft auf ein Abtriebsmittel, um den Vortrieb des Fahrzeugs zu bewerkstelligen. Um eine Variation des Antriebs zu erhalten, ist neben einer Anpassung der Antriebskraft auch eine Veränderung des Übertragungsverhältnisses möglich, beispielsweise mittels einer Gangschaltung oder allgemein einem Getriebe.

Während automatische Gangschaltungen bei Kraftfahrzeugen schon seit längerem bekannt sind, werden diese bei Fahrrädern erst seit der Einführung der Elektrofahrräder für den breiten Massenmarkt interessanter. Neben der erforderlichen Steuertechnik ist auch die Elektrifizierung bei derartigen Ebikes und Pedelecs einfacher zu realisieren. Da jedoch die Detektion des aktuell eingestellten Ganges weiterhin einen zusätzlichen und ggf. aufwändigen Sensor erfordert, sind automatischen Gangschaltungen für Elektrofahrräder und auch für nicht angetriebene Fahrräder bisher noch ein Nischenprodukt.

Aus der Schrift DE 10 2014 212758 A1 ist ein System zur Identifikation des Fahrers eines Fahrzeugs mittels der Erfassung von Betriebsgrößen des Fahrzeugs bekannt. Hierzu werden Benutzerprofile hinterlegt, die mit den erfassten Betriebsgrößen bzw. mit dem Fahrverhalten verglichen werden. Diese Identifikation kann dazu genutzt werden, Einstellungen am Fahrzeug individuell auf den Fahrer anzupassen, z.B. die Voreinstellungen für die Schaltgruppe.

Eine weitere Einstellung der Gangschaltung in Abhängigkeit von Benutzerprofilen für eine Anfahrsituation ist aus der DE 10 2015 208248 A1 bekannt. Neben der Auswahl des Benutzerprofils mittels eines Bedienelements kann auch die Erkennung der Umfeldbedingungen bzw. Betriebsgrößen zur Einstellung der Gangschaltung verwendet werden.

Das Dokument US6047230 zeigt ein gattungsgemäßes Verfahren und die äquivalente Vorrichtung.

### Offenbarung der Erfindung

Das erfindungsgemäße Verfahren zum Einlernen einer automatischen Gangschaltung eines Zweirads bzw. eine Vorrichtung zur Durchführung dieses Verfahrens sowie ein Zweirad mit einer derartigen Vorrichtung ändert ein vorliegendes Kennfeld zur Steuerung der Gangschaltung aufgrund der individuellen Benutzungsinformationen ab. Optional kann mit dem vorliegenden Verfahren auch ein Kennfeld zur Steuerung der Gangschaltung erstellt werden, indem die Benutzerinformationen bei Schaltvorgängen registriert und für weitere automatische Schaltvorgänge genutzt werden.

Zur Durchführung eines automatischen Schaltvorgangs werden zunächst Betriebsgrößen des Zweirads mit einer Gangschaltung erhoben, z.B. eines Fahrrads. Eine mögliche (Sensor-)Größe zur Ableitung eines gewünschten oder für die Effizienz sinnvollen Gangwechsels kann dabei die Erfassung einer Drehzahlgröße sein, die die Drehzahl, die Trittfrequenz bzw. die Kadenz der Tretkurbel des Zweirads repräsentiert. Weiterhin kann eine Drehmomentgröße erfasst werden, die das vom Fahrer auf die Tretkurbel aufgebrachte (Tret-)Drehmoment repräsentiert. Weiterhin ist notwendig, dass die Steuerung der Gangschaltung Informationen über den aktuell eingelegten Gang erfasst. Ausgehend von diesen oder entsprechend anderen geeigneten Sensorgrößen, die die Fahrdynamik und somit die Wechselbereitschaft der Gangschaltung charakterisieren, wird ohne Eingriff des Fahrers ein Schaltvorgang der Automatikschaltung initiiert. Typischerweise erfolgt dabei die konkrete Steuerung der Schaltung mit Hilfe eines Kennfelds oder einer Datenbank, in dem bzw. der eine Zuweisung der erfassten Sensorgrößen zu den effizienten Gängen hinterlegt ist. Dabei kann neben der Effizienz auch eine Rolle spielen, welches Tretverhalten der Fahrer des Zweirads aufweist. So ist durchaus bekannt, dass sportlichere Fahrradfahrer tendenziell eher mit höheren Kadenzen und ältere Fahrradfahrer tendenziell eher mit niedrigeren Kadenzen fahren. Entsprechend kann die Zuweisung zu den eingelegten Gängen je nach Nutzung des Zweirads bzw. der Gangschaltung am Fahrrad unterschiedlich sein.

Zur Anpassung einer bereits in der automatischen Gangschaltung vorliegenden Zuweisung in Form eines Kennfelds oder einer Datenbank wird das Vorliegen einer ersten manuellen Schaltanforderung durch den Fahrer erfasst. Diese erste manuelle Schaltanforderung führt dazu, dass die Gangschaltung ausgehend von dem bereits eingelegten Gang in einen ersten Zielschaltgang geschalten wird. Wird keine weitere Schaltanforderung erfasst, weist der neue erste Zielschaltgang somit einen Gang auf, der für den Fahrer als angenehm empfunden wird, weshalb die Zuweisung in dem Kennfeld bzw. der Datenbank entsprechend angepasst wird. Diese neue Zuweisung der erfassten Sensorgrößen zu dem neuen ersten Zielschaltgang kann dann für weitere Schaltvorgänge im Rahmen der automatischen Schaltung zur Verfügung stehen.

Wird jedoch innerhalb einer vorbestimmten Zeitdauer eine zweite manuelle Schaltanforderung durch den Fahrer erfasst, ist zu prüfen, ob trotzdem eine Änderung der Zuweisung im Kennfeld oder in der Datenbank vorgenommen werden soll. Hierbei ist zu unterscheiden, ob die zweite Schaltanforderung dazu führt, dass in den zuvor eingelegten Gang zurück geschalten wird, oder ob in einen neuen, zweiten Zielschaltgang geschalten wird.

Führt die zweite manuelle Schaltanforderung dazu, dass erneut in den zuvor eingelegten Gang geschalten wird, so deutet dieser Vorgang darauf, dass der Fahrer mit dem neuen ersten Zielgang nicht zufrieden ist bzw. dieser erste Zielgang nicht als effizient angesehen werden kann. Aus diesem Grund ist bei Vorliegen einer derartigen zweiten Schaltanforderung keine Änderung des Kennfelds bzw. der Datenbank vorgesehen.

Führt die zweite manuelle Schaltanforderung jedoch zu einer Schaltung der Gangschaltung in einen zweiten Zielschaltgang, der sich vom zuvor eingelegten Gang unterscheidet, so deutet das darauf hin, dass der Fahrer den zunächst ausgewählten ersten Zielschaltgang ebenfalls nicht als effizient oder angenehm empfindet. Um jedoch zu überprüfen, ob dieser zweite Zielschaltgang für die Änderung des Kennfelds bzw. der Datenbank verwendet werden soll, wird erneut eine vorbestimmte Zeitdauer das Vorliegen einer weiteren Schaltanforderung abgewartet. Erst wenn keine weitere Schaltanforderung vorliegt, wird die Änderung mit dem zuletzt eingestellten Schaltgang vorgenommen.

Weitere Vorteile ergeben sich aus der nachfolgenden Beschreibung von Ausführungsbeispielen bzw. aus den abhängigen Patentansprüchen.

### Kurze Beschreibung der Zeichnungen

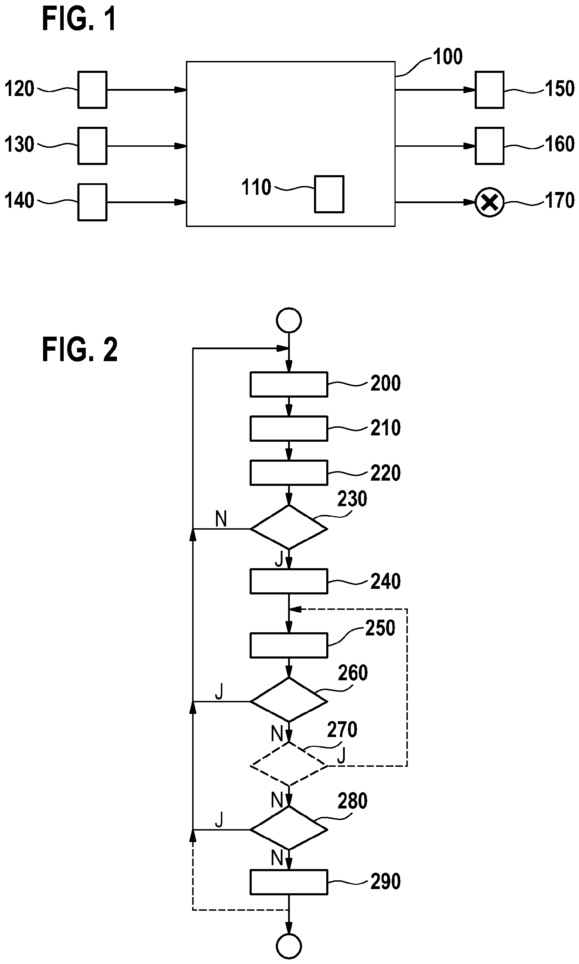

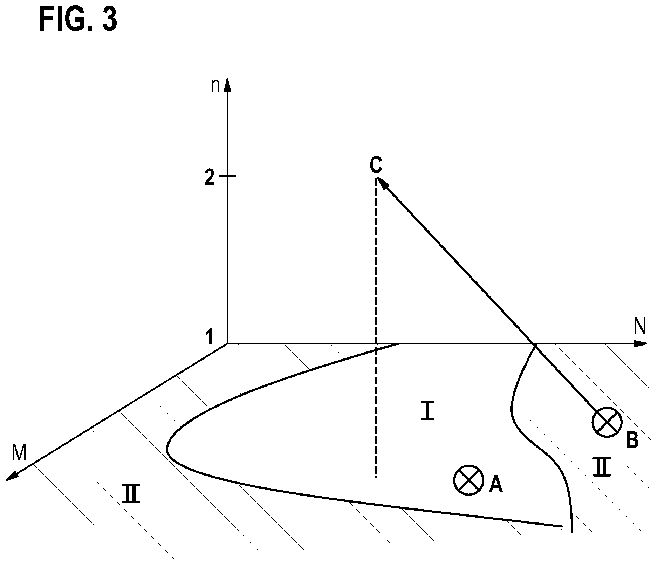

Die Figur 1 zeigt schematisch ein Blockschaltbild einer erfindungsgemäßen Steuereinheit. In der Figur 2 wird anhand eines Flussdiagramms das erfindungsgemäße Verfahren beschrieben. Eine graphische Darstellung eines Kennfelds basierend auf der Trittfrequenz, dem Tretdrehmoment des Fahrers und des eingelegten Gangs ist in Figur 3 dargestellt.

### Ausführungsbeispiel

Wie bereits vorstehend ausgeführt, wird mit der vorliegenden Erfindung ein Verfahren bzw. eine Vorrichtung beschrieben, die die Verwendung einer automatischen Gangschaltung an einem Zweirad, z.B. einem Fahrrad bzw. ein elektrisch antreibbares Fahrrad, auf die Benutzer individuell anpasst. Alternativ kann mit dem vorgestellten Verfahren bzw. der Vorrichtung jedoch auch ein eigenes benutzerindividuelles Profil erstellt werden.

Zur Durchführung des erfindungsgemäßen Verfahrens ist eine Vorrichtung 100 vorgesehen, wie sie in Figur 1 schematisch dargestellt ist. Diese Vorrichtung 100, z.B. ein Steuergerät, erfasst die Drehzahl des Fahrers in Form einer Drehzahlgröße N. Typischerweise werden derartige Drehzahlgrößen durch einen Drehzahlsensor 120 an den Kurbeln eines Fahrrads erfasst. Weiterhin wird ein Fahrerdrehmoment in Form einer Drehmomentgröße M erfasst. Hierzu werden typischerweise Drehmomentsensoren 130 eingesetzt, die in der Tretachse oder an den Pedalen der Tretkurbel angebracht sind. Schlussendlich wird durch einen geeigneten Sensor 140 erfasst, in welchem Gang n sich die automatische Gangschaltung aktuell befindet. Alternativ kann zum Sensor 140 auch eine interne Auswertung der automatischen Gangschaltung herangezogen werden, in der der aktuell eingelegte Gang n vermerkt ist.

Ausgehend von den erfassten Sensorgrößen N, M und n und abgespeicherten Werten für die Zuweisung dieser Sensorgrößen zu einem bevorzugten Gang in einem Kennfeld bzw. einer Datenbank im Speicher 140 wird die automatische Gangschaltung 150 gesteuert. Es sei jedoch ausdrücklich darauf hingewiesen, dass auch entsprechend andere Sensorgrößen erfasst werden können, die Grundlage für die Ableitung eines Schaltverhaltens der automatischen Gangschaltung sein können.

Optional kann vorgesehen sein, dass die erfassten Sensorgrößen auch zur Steuerung des Motors 160 verwendet werden können, z.B. zur Berücksichtigung der Ansteuerung eines Getriebes im Motor, welches die Funktion einer automatischen Gangschaltung übernehmen kann. Darüber hinaus ist auch die Anzeige einer Schaltempfehlung, eines bevorstehenden oder eines durchgeführten Schaltvorgangs auf einem Anzeige oder Bedienelement 170 vorgesehen.

Anhand des Flussdiagramms der Figur 2 wird das erfindungsgemäße Verfahren in einem bevorzugten Ausführungsbeispiel beschrieben. Zunächst werden in Schritt 200 die Drehzahl N, das (Fahrer-)Drehmoment M sowie der aktuell eingelegte Gang n erfasst bzw. ermittelt. Anschließend wird eine Schaltung der automatischen Gangschaltung basierend auf der erfassten (Sensor-)Größen N, M und n und einem Kennfeld bzw. einer Datenbank durchgeführt. Wie bereits ausgeführt, können in den Schritten 200 und 210 auch andere Betriebsgrößen verwendet werden, die den Schaltvorgang initiieren können. Im nächsten Schritt 220 wird eine erste manuelle Schaltanforderung durch den Fahrer erfasst, die die automatische Schaltung übersteuert bzw. überbrückt. Dies kann beispielsweise derart erfolgen, dass das erfindungsgemäße Verfahren erst dann weitergeführt wird, bis eine erste manuelle Schaltanforderung erfasst wird, während gleichzeitig das Verfahren zur Steuerung der automatischen Gangschaltung unabhängig weiterläuft, oder in einem nächsten Schritt 230 das Vorliegenden dieser ersten manuellen Schaltanforderung überprüft wird. Solange keine erste manuelle Schaltanforderung vorliegt, wird die automatische Gangschaltung mit einer erneuten Erfassung der hierzu relevanten Größen, z.B. N,M und n mit Schritt 200 begonnen.

Erkennt das Verfahren jedoch im Schritt 230, dass eine erste manuelle Schaltanforderung vorliegt, wird die Gangschaltung zur Umsetzung dieser Schaltanforderung im Schritt 240 in einen ersten Zielschaltgang angesteuert. Anschließend wird erneut erfasst, ob der Fahrer eine weitere, zweite manuelle Schaltanforderung gibt. Diese erfasste zweite manuelle Schaltanforderung wird ebenfalls in Schritt 250 in Form einer Schaltung der Gangschaltung in einen zweiten Zielschaltgang zeitnah umgesetzt. Bei dieser Erfassung in Schritt 250 wird eine vorbestimmte Zeitdauer abgewartet, z.B. 2 oder 4 s, bevor zum nächsten Schritt 260 übergangen wird. In diesem Schritt 260 wird geprüft, ob der zuletzt eingestellte erste bzw. zweite Zielschaltgang eine entsprechende Zuweisung zu den erfassten (Sensor-)Größen N und M entsprechend des abgelegten Kennfelds bzw. der Datenbank aufweist. Ist das der Fall, wird die automatische Gangschaltung mit dem Schritt 200 erneut durchgeführt. Liegt keine entsprechende Zuweisung im Schritt 260 vor, wird im Schritt 280 überprüft, ob der neue Gang, der durch die zweite manuelle Schaltanforderung eingelegt wird, dem durch die automatische Schaltung in Schritt 210 eingelegten Gang entspricht. Ist dies der Fall, deutet das Zurückschalten durch den Fahrer darauf hin, dass der ursprüngliche, automatisch eingelegte Gang für den Fahrer angenehmer bzw. effizienter ist. In diesem Fall wird keine Änderung des Kennfelds vorgenommen und das Verfahren mit Schritt 200 erneut durchlaufen. Wird jedoch keine zweite manuelle Schaltanforderung im Schritt 250 erfasst, kann davon ausgegangen werden, dass der Fahrer auch zukünftig bei den erfassten Sensorgrößen für N und M in den neuen ersten Zielschaltgang schalten will. Daher wird im nachfolgenden Schritt 290 das Kennfeld bzw. die Datenbank entsprechend abgeändert, so dass die automatische Steuerung der Gangschaltung zukünftig auf die geänderten Zuweisungen zugreifen kann. Anschließend kann das Verfahren beendet werden oder erneut mit dem Schritt 200 beginnend durchlaufen werden.

In einer optionalen Ausgestaltung kann vorgesehen sein, dass z.B. nach dem Schritt 260 überprüft wird, ob der durch die zweite Schaltanforderung eingelegte zweite Zielschaltgang im Schritt 250 dem durch die automatische Schaltung eingelegten Gang in Schritt 210 entspricht. Ist das der Fall, wird weiter mit Schritt 280 verfahren. Ansonsten wird erkannt, dass der Fahrer nicht nur den ursprünglich durch die automatische Gangschaltung eingestellten Gang sondern auch den zunächst ausgewählten ersten Zielschaltgang als nicht angenehm bzw. nicht effizient empfindet. Daher wird bei Erkennung eines weiteren eingelegten Gangs das Verfahren erneut mit dem Schritt 250 durchlaufen, um zu überprüfen, ob dieser neu gewählte zweite Zielschaltgang beibehalten wird. Die für die Erfassung im Schritt 250 vorgesehene vorbestimmte Zeitdauer startet dabei von vorne.

Anhand der schematischen Darstellung eines möglichen Kennfelds zur Steuerung der automatischen Gangschaltung gemäß der Figur 3 kann das Verhalten eines Schaltvorgangs exemplarisch gezeigt werden. In dem dreidimensionalen Darstellung aus Drehzahl N, Drehmoment M und Gang n existieren für jeden Gang zwei Bereiche I und II. Während der Bereich I ein Verhältnis von Drehzahl N und Drehmoment II darstellt, welche für das System bzw. die (automatische) Gangschaltung als effizient und/oder für den Fahrer als angenehm angesehen wird, stellt der Bereich II Verhältnisse dar, in denen ein Schaltvorgang eingeleitet werden kann bzw. sollte. Würde demnach das System bzw. die automatische Gangschaltung ein Verhältnis von N zu M entsprechend dem Punkt A erkennen, würde kein Schaltvorgang eingeleitet. Bei einem Verhältnis dieser (Sensor-)Größen im Punkt B könnte das System bzw. die

(automatische) Gangschaltung jedoch eine Schaltempfehlung in einen neuen Gang (N=2) vorschlagen oder selbsttätig durchführen. Durch die Schaltung in einen anderen Gang ändern sich die Drehzahl/Trittfrequenz/Kadenz N sowie das (Tret-)Drehmoment M des Fahrers entsprechend dem Punkt C, so dass das neue Verhältnis im geänderten Gang wieder im Bereich I liegt. Durch die Erkennung des Systems bzw. der (automatische) Gangschaltung, dass ursprünglich nicht vorgesehene Verhältnisse oder Bereiche im Kennfeld zu einer manuellen Schaltung durch den Fahrer führen, kann das System selbstlernend das Kennfeld an das individuelle Benutzerverhalten angepasst werden, welches für weitere Schaltvorgänge zur Verfügung steht.

Generell kann das vorstehende Verfahren auch dazu genutzt werden, die Schaltbereiche durch den Fahrer zu erfassen und das Kennfeld mittels einer geeigneten Anzahl von Schaltvorgängen selbst zu erstellen. In diesem Fall kann ein leicht geändertes Verfahren gemäß der Figur 2 angewandt werden, indem zunächst kein Schaltvorgang aufgrund eines Kennfelds vorgenommen wird. Stattdessen wird überprüft, ob ein gewählter Gang lange genug benutzt wird, um einen ersten Bereich in einem Kennfeld zu generieren. Anschließend kann mit Hilfe des Verfahrens nach Figur 2 das Kennfeld bzw. eine derartige Datenbasis erzeugt oder erweitert werden.

In einem weiteren Ausführungsbeispiel kann auch vorgesehen sein, dass aufgrund von individuellen Betriebsinformationen erkannt wird, dass unterschiedliche Fahrer das Zweirad benutzen. Hierzu kann für jeden Benutzer ein individuelles Kennfeld angelegt und verwendet werden. Auf entsprechende Verfahren zur Erkennung unterschiedlicher Fahrer wurde eingangs verwiesen.

## Patentansprüche

1. Verfahren zum Einlernen einer automatischen Gangschaltung eines Zweirads,
wobei das Verfahren die Schritte
• Erfassung (200) wenigstens
o einer die Drehzahl der Tretkurbel des Zweirads repräsentierenden ersten Drehzahlgröße (N), und
∘ einer durch den Fahrer auf die Tretkurbel aufgebrachten Drehmoment repräsentierende Drehmomentgröße (M), und
o des eingelegten Gangs (n) der Automatikgangschaltung (150), und
• Durchführung (210) eines Schaltvorgangs in einen Automatikschaltgang (150) in Abhängigkeit der Drehzahlgröße (N), des Drehmoments (M) und des eingelegten Gangs (n) anhand eines Kennfelds, und
• Erfassung (220) einer ersten manuellen Schaltanforderung durch den Fahrer, und
• Durchführung (240) eines Schaltvorgangs in einen ersten Zielschaltgang in Abhängigkeit der Schaltanforderung, und
• Änderung (290) des Kennfelds durch Zuordnung des ersten Zielschaltgang zur erfassten Drehzahlgröße (N) und zum erfassten Drehmoment (M)
aufweist,
**dadurch gekennzeichnet, dass** das Verfahren zusätzlich die Schritte
• Erfassung (250) einer zweiten manuellen Schaltanforderung nach der ersten manuellen Schaltanordnung durch den Fahrer während einer vorbestimmten Zeitdauer, und
• Änderung (290) des Kennfelds in Abhängigkeit des Ablaufens einer vorbestimmten Zeitdauer ohne Erfassung einer zweiten manuellen Schaltanforderung
aufweist.

2. Verfahren nach Anspruch 1, **dadurch gekennzeichnet, dass** das Verfahren zusätzlich die Schritte
• Erfassung (250) einer zweiten manuellen Schaltanforderung durch den Fahrer während einer vorbestimmten Zeitdauer, und
• Vergleich (280) des zweiten Zielschaltgangs der zweiten Schaltanforderung mit dem Automatikschaltgang,
aufweist.
wobei eine Änderung (290) des Kennfelds unterbunden wird, falls der zweite Zielschaltgang dem Automatikschaltgang entspricht.

3. Verfahren nach Anspruch 1 oder 2, **dadurch gekennzeichnet, dass** das Verfahren zusätzlich den Schritt
• Vergleich (270) des zweiten Zielschaltgangs der zweiten Schaltanforderung mit dem Automatikschaltgang,
aufweist,
wobei eine erneute Erfassung (250) einer zweiten manuellen Schaltanforderung durch den Fahrer während einer vorbestimmten Zeitdauer erfolgt, falls der zweite Zielschaltgang nicht dem Automatikschaltgang entspricht.

4. Vorrichtung zum Einlernen einer automatischen Gangschaltung (150) eines Zweirads mit einer Steuereinheit (100) und einem Speicher (110), wobei die Steuereinheit (100)
• wenigstens
o eine die Drehzahl der Tretkurbel des Zweirads repräsentierenden ersten Drehzahlgröße (N), und
∘ eine durch den Fahrer auf die Tretkurbel aufgebrachtes Drehmoment repräsentierende Drehmomentgröße (M), und
o den eingelegten Gang der Gangschaltung (n)
erfasst, und
• ein Steuersignal zur Durchführung eines Schaltvorgangs in den Automatikschaltgang in Abhängigkeit der Drehzahlgröße (N), des Drehmoments (M) und des eingelegten Gangs (n) anhand eines im Speicher (110) abgelegten Kennfelds erzeugt, und
• eine erste manuelle Schaltanforderung durch den Fahrer erfasst, und
• ein weiteres Steuersignal zur Durchführung eines Schaltvorgangs in einen ersten Zielschaltgang in Abhängigkeit der Schaltanforderung erzeugt, und
• das Kennfeld im Speicher (110) durch Zuordnung des ersten Zielschaltgang zur erfassten Drehzahlgröße (N) und zum erfassten Drehmoment (M) ändert,
**dadurch gekennzeichnet, dass** die Steuereinheit (100)
• eine zweite manuelle Schaltanforderung nach der ersten manuellen Schaltanordnung durch den Fahrer während einer vorbestimmten Zeitdauer erfasst, und
• das Kennfeld in Abhängigkeit des Ablaufens des vorbestimmten Zeitdauer ohne Erfassung einer zweiten manuellen Schaltanforderung ändert.

5. Vorrichtung nach Anspruch 4, **dadurch gekennzeichnet, dass** die Steuereinheit (100)
• eine zweiten manuellen Schaltanforderung durch den Fahrer während einer vorbestimmten Zeitdauer erfasst, und
• einen Vergleich des zweiten Zielschaltgangs der zweiten Schaltanforderung mit dem Automatikschaltgang durchführt,
wobei eine Änderung des Kennfelds unterbunden wird, falls der zweite Zielschaltgang dem Automatikschaltgang entspricht.

6. Vorrichtung nach Anspruch 4 oder 5, **dadurch gekennzeichnet, dass** die Steuereinheit (100)
• einen Vergleich des zweiten Zielschaltgangs der zweiten Schaltanforderung mit dem Automatikschaltgang durchführt,
wobei eine erneute Erfassung einer zweiten manuellen Schaltanforderung durch den Fahrer während einer vorbestimmten Zeitdauer erfolgt, falls der zweite Zielschaltgang nicht dem Automatikschaltgang entspricht.

7. Zweirad, insbesondere ein elektrisch antreibbares Fahrrad, mit einer automatischen Gangschaltung und einer Vorrichtung nach einem der Ansprüche 4 bis 6 und/oder einem Steuergerät, welches ein Verfahren nach einem der Ansprüche 1 bis 3 ausführt.

## Claims

1. Method for self-training an automatic gear-shifting mechanism of a two-wheeled vehicle,
the method comprising the steps of
• detecting (200) at least
o a first speed variable (N), representing the rotational speed of the pedal crank of the two-wheeled vehicle, and
o a torque variable (M), representing torque applied to the pedal crank by the rider, and
o the selected gear (n) of the automatic gear-shifting mechanism (150), and
• performing (210) a gear-changing operation to an automatic gear (150) in dependence on the speed variable (N), the torque (M) and the selected gear (n) on the basis of a characteristic map, and
• detecting (220) a first manual gear-changing request of the rider, and
• performing (240) a gear-changing operation to a first target gear in dependence on the gear-changing request, and
• modifying (290) the characteristic map by assigning the first target gear to the detected speed variable (N) and to the detected torque (M),
**characterized in that** the method additionally includes the steps of
• detecting (250) a second manual gear-changing request after the first manual gear-changing instruction by the rider during a predetermined time period, and
• modifying (290) the characteristic map in dependence on a predetermined time period elapsing without a second manual gear-changing request being detected.

2. Method according to Claim 1, **characterized in that** the method additionally includes the steps of
• detecting (250) a second manual gear-changing request by the rider during a predetermined time period, and
• comparing (280) the second target gear of the second gear-changing request with the automatic gear,
wherein a modification (290) of the characteristic map is prevented if the second target gear corresponds to the automatic gear.

3. Method according to Claim 1 or 2, **characterized in that** the method additionally includes the step of
• comparing (270) the second target gear of the second gear-changing request with the automatic gear,
wherein a renewed detection (250) of a second manual gear-changing request by the rider takes place during a predetermined time period if the second target gear does not correspond to the automatic gear.

4. Apparatus for self-training an automatic gear-shifting mechanism (150) of a two-wheeled vehicle with a control unit (100) and a memory (110), wherein the control unit (100) detects
• at least
o a first speed variable (N), representing the rotational speed of the pedal crank of the two-wheeled vehicle, and
o a torque variable (M), representing torque applied to the pedal crank by the rider, and
o the selected gear of the gear-shifting mechanism (n),
and
• a control signal for performing a gear-changing operation to the automatic gear in dependence on the speed variable (N), the torque (M) and the selected gear (n) on the basis of a characteristic map stored in the memory (110), and
• detects a first manual gear-changing request of the rider, and
• generates a further control signal for performing a gear-changing operation to a first target gear in dependence on the gear-changing request, and
• modifies the characteristic map in the memory (110) by assigning the first target gear to the detected speed variable (N) and to the detected torque (M), **characterized in that** the control unit (100)
• detects a second manual gear-changing request after the first manual gear-changing instruction by the rider during a predetermined time period, and
• modifies the characteristic map in dependence on the predetermined time period elapsing without a second manual gear-changing request being detected.

5. Apparatus according to Claim 4, **characterized in that** the control unit (100)
• detects a second manual gear-changing request by the rider during a predetermined time period, and
• carries out a comparison of the second target gear of the second gear-changing request with the automatic gear,
wherein a modification of the characteristic map is prevented if the second target gear corresponds to the automatic gear.

6. Apparatus according to Claim 4 or 5, **characterized in that** the control unit (100)
• carries out a comparison of the second target gear of the second gear-changing request with the automatic gear,
wherein a renewed detection of a second manual gear-changing request by the rider takes place during a predetermined time period if the second target gear does not correspond to the automatic gear.

7. Two-wheeled vehicle, in particular a bicycle that can be electrically driven, with an automatic gear-shifting mechanism and an apparatus according to one of Claims 4 to 6 and/or a control device which performs a method according to one of Claims 1 to 3.

## Revendications

1. Procédé d'apprentissage d'un changement de rapport automatique sur un deux-roues,
le procédé comprenant les étapes suivantes
• détecter (200) au moins
∘ une première grandeur vitesse de rotation (N) représentant la vitesse de rotation du pédalier du deux-roues, et
∘ une grandeur couple (M) représentant le couple appliqué par le conducteur sur le pédalier, et
∘ le rapport engagé (n) du changement de rapport automatique (150), et
• effectuer (210) un passage dans un rapport automatique (150) en fonction de la grandeur vitesse de rotation (N), du couple (M) et du rapport engagé (n) à l'aide d'un diagramme caractéristique, et
• détecter (220) une première demande de changement de rapport manuel par le conducteur, et
• effectuer (240) un passage dans un premier rapport cible en fonction de la demande de changement de rapport, et
• modifier (290) le diagramme caractéristique par association du premier rapport cible à la grandeur vitesse acquise (N) et au couple acquis (M),
**caractérisé en ce que** le procédé comprend en outre les étapes suivantes
• détecter (250) une deuxième demande de changement de rapport manuel après la première prescription de changement de rapport manuel par le conducteur pendant une durée prédéterminée, et
• modifier (290) le diagramme caractéristique en fonction de l'expiration d'une durée prédéterminée sans détection d'une deuxième demande de changement de rapport manuel.

2. Procédé selon la revendication 1, **caractérisé en ce que** le procédé comprend en outre les étapes suivantes
• détecter (250) une deuxième demande de changement de rapport manuel par le conducteur pendant une durée prédéterminée, et
• comparer (280) le deuxième rapport cible de la deuxième demande de changement de rapport au rapport automatique,
une modification (290) du diagramme caractéristique étant supprimée si le deuxième rapport cible correspond au rapport automatique.

3. Procédé selon la revendication 1 ou 2, **caractérisé en ce que** le procédé comprend en outre l'étape suivante
• comparer (270) le deuxième rapport cible de la deuxième demande de changement de rapport au rapport automatique,
une nouvelle détection (250) d'une deuxième demande de changement de rapport manuel par le conducteur étant effectuée pendant une durée prédéterminée si le deuxième rapport cible ne correspond pas au rapport automatique.

4. Dispositif d'apprentissage d'un changement de rapport automatique (150) d'un deux-roues, ledit dispositif comprenant une unité de commande (100) et une mémoire (110), l'unité de commande (100) détectant
• au moins
∘ une première grandeur vitesse de rotation (N) représentant la vitesse de rotation du pédalier du deux-roues, et
∘ une grandeur couple (M) représentant le couple appliqué par le conducteur sur le pédalier, et
∘ le rapport engagé (n) du changement de rapport, et générant
• un signal de commande destiné à effectuer un passant dans le rapport automatique en fonction de la grandeur vitesse de rotation (N), du couple (M) et du rapport engagé (n) sur la base d'un diagramme caractéristique stocké dans la mémoire (110), et détectant
• une première demande de changement de rapport manuel par le conducteur, et générant
• un autre signal de commande destiné à effectuer un passant dans un premier rapport cible en fonction de la demande de changement de rapport, et modifiant
• le diagramme caractéristique dans la mémoire (110) par association du premier rapport cible à la grandeur vitesse de rotation détectée (N) et au couple détecté (M),
**caractérisé en ce que** l'unité de commande (100) détecte
• une deuxième demande de changement de rapport manuel après la première prescription de changement de rapport manuel par le conducteur pendant une durée prédéterminée, et modifie
• la demande caractéristique en fonction de l'expiration de la durée prédéterminée sans détection d'une deuxième demande de changement de rapport manuel.

5. Dispositif selon la revendication 4, **caractérisé en ce que** l'unité de commande (100) détecte
• une deuxième demande de changement de rapport manuel par le conducteur pendant une durée prédéterminée, et effectue
• une comparaison du deuxième rapport cible de la deuxième demande de changement de rapport au rapport automatique,
une modification du diagramme caractéristique étant empêchée si le deuxième rapport cible correspond au rapport automatique.

6. Dispositif selon la revendication 4 ou 5, **caractérisé en ce que** l'unité de commande (100) effectue
• une comparaison du deuxième rapport cible de la deuxième demande de changement de rapport au rapport automatique,
une nouvelle détection de la deuxième demande de changement de rapport manuel étant effectuée par le conducteur pendant une durée prédéterminée si le deuxième rapport cible ne correspond pas au rapport automatique.

7. Deux-roues, notamment un vélo à entraînement électrique, comprenant un changement de rapport automatique et un dispositif selon l'une des revendications 4 à 6 et/ou une unité de commande mettant en œuvre un procédé selon l'une des revendications 1 à 3.
